## Europäisches Patentamt

## European Patent Office

## Office européen des brevets

(11) Veröffentlichungsnummer: **0 009 007**
**B1**

(12) # EUROPÄISCHE PATENTSCHRIFT

(45) Veröffentlichungstag der Patentschrift:
23.06.82

(51) Int. Cl.³: **B 29 D 23/12,** B 29 D 3/02,
F 16 L 9/12

(21) Anmeldenummer: 79810084.8

(22) Anmeldetag: 03.09.79

(54) Verfahren zur Herstellung eines faserverstärkten Kunststoffrohres und nach dem Verfahren hergestelltes Rohr.

(30) Priorität: 07.09.78 CH 9409/78
12.09.78 CH 9542/78
12.09.78 CH 9546/78
10.05.79 CH 4373/79

(43) Veröffentlichungstag der Anmeldung:
19.03.80 Patentblatt 80/6

(45) Bekanntmachung des Hinweises auf die Patenterteilung:
23.06.82 Patentblatt 82/25

(84) Benannte Vertragsstaaten:
CH DE FR GB IT NL SE

(56) Entgegenhaltungen:
DE-A-1 629 344
DE-A-2 046 709
DE-A-2 319 211
DE-A-2 703 581
FR-A-887 124
FR-A-1 275 480
FR-A-2 060 049
FR-A-2 152 289
FR-A-2 284 819

FR-A-2 371 598
FR-A-2 389 038
GB-A-1 231 091
GB-A-1 401 748
LU-A-68 626
US-A-3 970 495
US-A-4 089 190
US-A-4 106 797

(73) Patentinhaber: **CIBA-GEIGY AG, Patentabteilung
Postfach, CH-4002 Basel (CH)**

(72) Erfinder: **Puck, Alfred, Dr., Säckingerstrasse 16,
CH-4058 Basel (CH)**
Erfinder: **Voirol, Peter, Gorenmattstrasse 41,
CH-4102 Binningen (CH)**

BUNDESDRUCKEREI BERLIN

## Verfahren zur Herstellung eines faserverstärkten Kunststoffrohrs und nach dem Verfahren hergestelltes Rohr

Die Erfindung betrifft ein Verfahren zur Herstellung eines mit Fasern hoher Steifigkeit verstärkten Kunststoffrohrs gemäß dem Oberbegriff des Patentanspruchs 1.

Bei der Herstellung von aus Glasfasern gewickelten Rohren ist es bekannt, abschließend noch eine Umfangswicklung aus denselben Glasfasern, wie sie auch für die darunterliegenden Wickelstrukturen verwendet werden, aufzubringen und damit den für die Erreichung hoher Fasergehalte und damit hoher Festigkeits- und Steifigkeitswerte erforderlichen Preßeffekt zu bewirken. Würde man diese Technik nun ohne weiteres auf die Herstellung von aus Kohlefasern gewickelten Rohren übertragen, so hieße dies, daß eine abschließende Umfangswicklung aus Kohlefasern anzubringen wäre. Wie die Erfahrung zeigt, ist dies jedoch ohne erhebliche Qualitätseinbußen des fertigen Produkts (Rohrs) aus den nachstehenden Gründen nicht möglich.

Die Aushärtung der Wickelstruktur erfolgt in der Regel bei relativ hohen Temperaturen, in der Praxis je nach Harz etwa bei 80 – 150° C. Beim anschließenden Abkühlen entstehen im Fasergefüge thermisch bedingte Eigenspannungszustände, welche die Belastbarkeit des Rohrs durch äußere Kräfte reduzieren. Im Extremfall können diese Eigenspannungen sogar so groß werden, daß sie auch ohne äußere Belastung zur Rißbildung führen. Die Entstehung dieser Eigenspannungen ist hauptsächlich durch die gegenüber Glasfasern ganz erheblich ausgeprägtere Anisotropie von Kohle- und vergleichbaren hochsteifen Fasern bedingt. Die Eigenspannungen sind grundsätzlich unvermeidbar, sie können jedoch durch geschickte Wahl der Wickelstruktur minimalisiert werden. So haben sich z. B. für Kraftübertragungswellen solche Wickelstrukturen als am geeignetsten erwiesen, bei welchen die Wickelwinkel sämtlicher Verstärkungsfaserschichten in einem Bereich unter ca. 30° zur Rohrachse liegen.

Würde man nun auf einer solchen Wickelstruktur, deren thermischer Ausdehnungskoeffizient in Umfangsrichtung in der Größenordnung um etwa $25 \cdot 10^{-6}$ bis $35 \cdot 10^{-6}$ pro K liegt, eine Umfangswicklung aus hochsteifen Fasern wie etwa Kohlefasern oder dergleichen aufbringen, so ergäben sich aufgrund deren gänzlich anderen thermischen Verhaltens (ihr Ausdehnungskoeffizient in Längsrichtung beträgt etwa $-2 \cdot 10^{-6}$ bis 0 pro K) beim der Aushärtung folgenden Abkühlungsprozeß enorme Eigenspannungszustände, welche nicht nur dazu tendieren, die äußere Umfangswicklung von der darunterliegenden Struktur abzulösen, sondern vor allem auch zu der schon erwähnten Rißbildung in der Umfangsschicht und in der darunterliegenden Faserstruktur und den daraus resultierenden unerwünschten Folgeerscheinungen führt.

Aufgabe der Erfindung ist demnach, dieses Problem der Erzeugung hoher Fasergehalte bei mit hochsteifen oder stark anisotropen Fasern verstärkten Kunststoffrohren zu lösen, um den gewünschten Preßeffekt zu erreichen.

Erfindungsgemäß wird dies durch die im Patentanspruch 1 beschriebenen Maßnahmen erreicht.

Die Erfindung betrifft auch ein nach dem Verfahren hergestelltes Kunststoffrohr. Das erfindungsgemäße Rohr ist im Patentanspruch 7 beschrieben.

Die erfindungsgemäß verwendeten relativ nachgiebigen Fasern verhindern die Rißbildung in zweifacher Hinsicht. Einerseits ist ihr Ausdehnungskoeffizient größer als der der darunterliegenden Wickelstruktur, so daß beim Abkühlen nach dem Aushärten schon gar keine Ablösungstendenz auftreten kann, sondern sogar im Gegenteil die Umfangswicklung auf das darunterliegende Fasergefüge aufschrumpft. Andererseits können in diesen Fasern aufgrund ihres extrem niedrigen E-Moduls von vornherein keine so großen Spannungen entstehen, welche eine Rißbildung oder Beeinträchtigung der tragenden Wickelstruktur zur Folge haben könnten.

Aus der US-A-4 089 190 ist ein mehrschichtiges, mit Kohlenstoffasern und anderen Fasern verstärktes Kunststoffrohr bekannt. Bei diesem bekannten Rohr besteht die außenliegende Umfangsschicht oder -wicklung aus Kohlenstofffasern, während andere, innenliegende Faserschichten beispielsweise aus Polyamid bestehen können. Dieser Aufbau ist gerade entgegengesetzt zum erfindungsgemäßen. Außerdem ist in dieser Patentschrift nichts über die Einhaltung bestimmter Elastizitätseigenschaften der verschiedenen Faserschichten gesagt. Die US-A-4 089 190 kann daher die Lehre der vorliegenden Erfindung in keiner Weise nahelegen.

Im folgenden wird die Erfindung anhand eines in der Zeichnung dargestellten Ausführungsbeispiels näher erläutert. Es zeigt

Fig. 1 einen Axialschnitt durch ein Ende einer erfindungsgemäßen Welle,

Fig. 2 einen Querschnitt durch die Welle nach der Linie II-II in Fig. 1,

Fig. 3 eine schematische Teilansicht der Welle mit Wickelstruktur des Rohrs und

Fig. 4 – 7 schematische Darstellungen zur Erläuterung der Erzeugung der Wandverstärkungen des Rohrs.

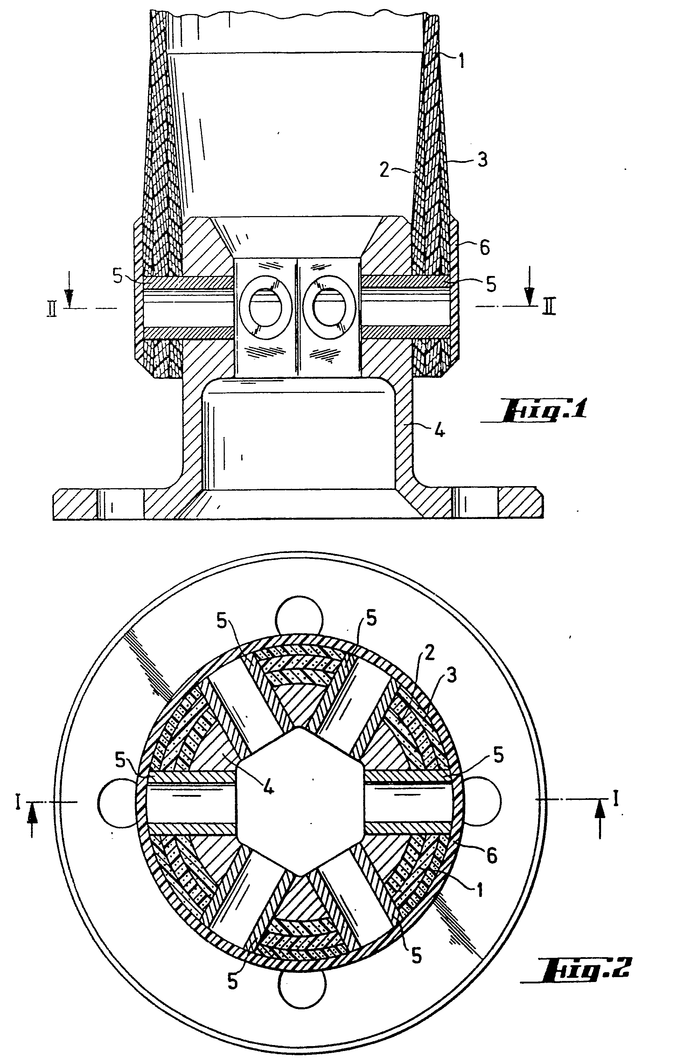

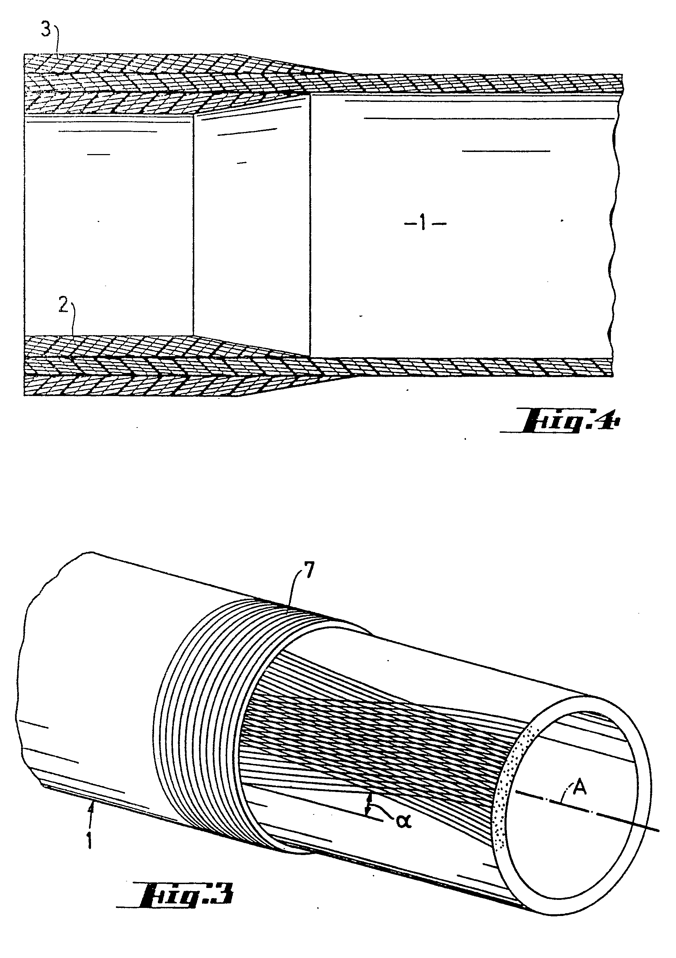

Die in Fig. 1 und 2 dargestellte Welle umfaßt ein mittels Kohlenstoff-Fasern verstärktes Kunststoffrohr 1, das an seinen beiden Enden, von denen in Fig. 1 nur eines dargestellt ist, durch je zwei ein- bzw. aufgeklebte Hülsen bzw. Rohrstücke 2 und 3 verstärkt ist. In die innere Verstärkungshülse 2 ist ein Metallfitting 4 eingeschoben. Die Drehmomentübertragung vom Metallfitting in die Welle erfolgt mittels radialer Bolzen 5. Letztere sind durch eine auf die äußere Verstärkungshülse 3 aufgeklebte Hülse 6 gesichert.

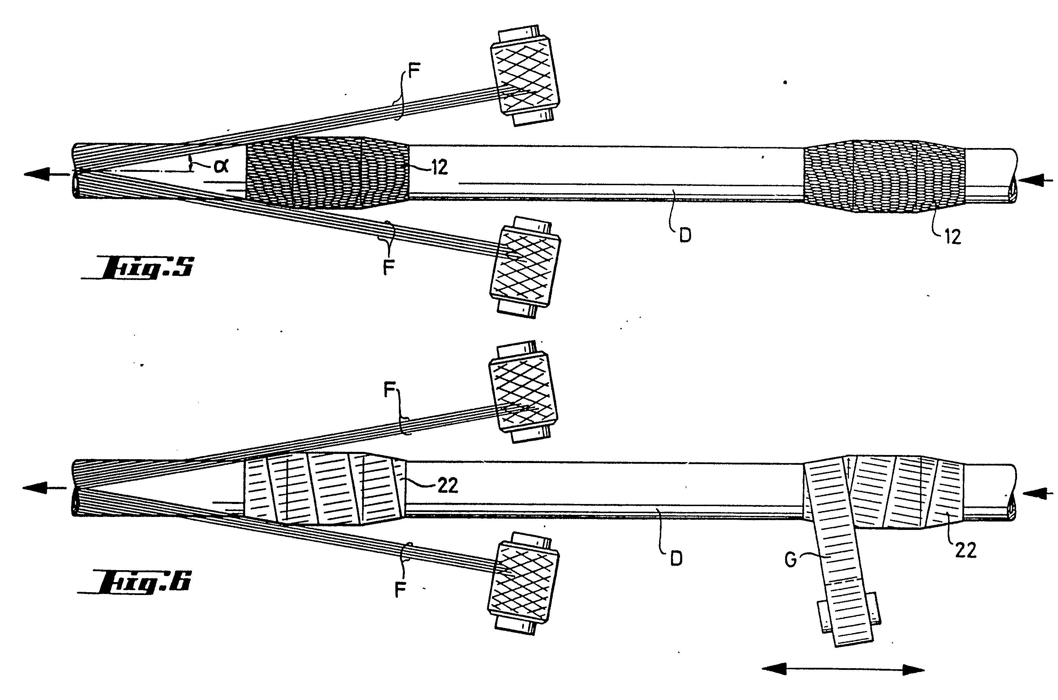

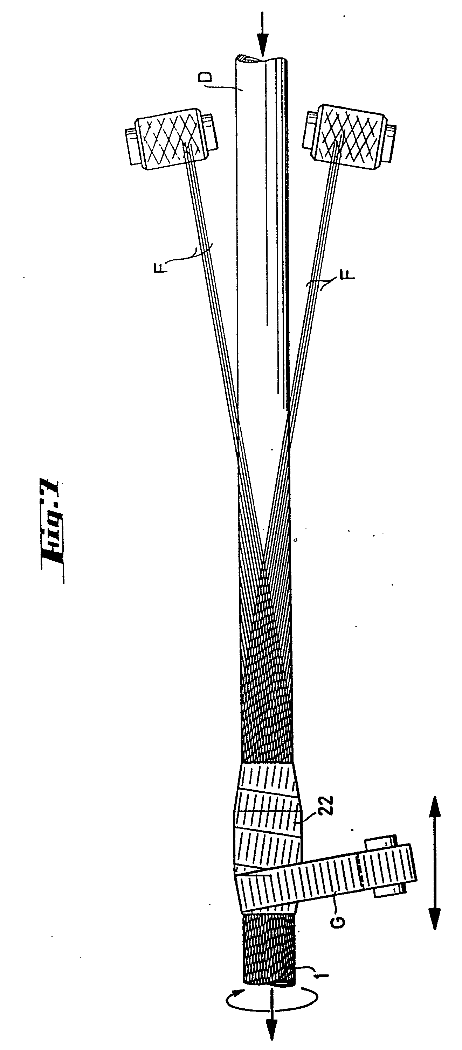

Das faserverstärkte Kunststoffrohr 1 ist nach an sich bekannten Methoden, wie sie z. B. in den US-Patentschriften 2 723 705, 3 068 134, 3 202 560, 3 216 876, 3 700 519 und 4 089 190 beschrieben sind, hergestellt, indem wie in den Fig. 5−7 schematisch dargestellt, mit einem härtbaren Kunststoff getränkte Verstärkungsfasern F aus Kohlenstoff unter vorbestimmten Wickelwinkeln $\alpha$ auf einen Wickeldorn D aufgewickelt werden und das Ganze dann unter Wärmeeinwirkung ausgehärtet wird.

Als Kohlenstoff-Verstärkungsfasern kommen vorzugsweise die unter der Markenbezeichnung »Thornel Typ P« von der Firma Union Carbide Corp., 270 Park Avenue, New York, N. Y. 10 017, angebotenen, sogenannten Pitch-Fibers in Frage.

Die Fasern sind je nach Anwendungsfall mehr oder weniger stark zur Rohrachse geneigt orientiert. Der Wickelwinkel $\alpha$ (Fig. 3) in bezug auf die Rohrachse A beträgt maximal etwa $\pm 25°$ bis $\pm 30°$ vorzugsweise aber maximal $\pm 20°$ und darunter. Ein kleinerer Wickelwinkel als $10°$ erhöht zwar den E-Modul des Rohrs in Längsrichtung, reduziert aber gleichzeitig die Torsionssteifigkeit auf für die Verwendung als Antriebswelle unzulässig niedrige Werte. Für die Praxis besonders vorteilhaft haben sich Wickelwinkel von $\pm 11°$ bis $\pm 17°$ erwiesen, insbesondere Winkel in einem Bereich von $\pm 12° − \pm 14°$. Bei diesen Wickelwinkel ergeben sich gleichzeitig sowohl genügend hohe Torsionssteifigkeiten als auch genügend hohe Längsbiegesteifigkeiten. Selbstverständlich könnten innerhalb der gegebenen Grenzen für die Wickelwinkel auch mehrere Faserschichten mit unterschiedlichen Faserorientierungen vorhanden sein.

Der Fasergehalt des Kunststoffrohrs beträgt etwa 50−70, vorzugsweise etwa 60−70 Vol.-%. Um diesen relativ hohen Fasergehalt zu erreichen, wird das Rohr während der Herstellung, d. h. solange das Laminierharz noch fließfähig ist, außen mit einer Umfangswicklung 7 (Fig. 3) aus einem leichten und gegenüber den Kohlefasern relativ nachgiebigen (geringer E-Modul) Material mit hohem Wärmedehnungskoeffizienten versehen. Der Wärmedehnungskoeffizient des Umfangswickelmaterials sollte größer sein als der Wärmedehnungskoeffizient des Kohlenstoffaser-Harz-Verbundes in Umfangsrichtung, bei den oben angeführten Wickeldaten also z. B. etwa größer als $25−30 \cdot 10^{-6}/oK$. Als geeignetes Material (Fasern, Bänder, Gewebe) kommt beispielsweise Polyester (z. B. Diolen®, E-Modul ca. 3000 N/mm²) oder Polyamid-Abreißband (z. B. Nylon®, Qualität 7849 von Inertglas) in Frage. Die Umfangswicklung wird mit möglichst hoher Spannung aufgebracht (Zugkraft etwa 200−500 N). Die Zugkraft darf jedoch selbstverständlich nicht solche Werte erreichen, die zu einer Beschädigung des Wickelmaterials führen. Die Umfangswicklung preßt das überschüssige Laminierharz aus dem Fasergefüge, erzeugt aber dank ihres hohen Wärmedehnungskoeffizienten und ihrer Nachgiebigkeit keine wesentlichen interlaminaren Spannungen bei der Abkühlung bzw. Aushärtung des Rohrs. Zur Festigkeit und Steifigkeit des Rohrs trägt sie im wesentlichen nichts bei.

Als Kunststoff-Tränkungsmaterial für die Rohrherstellung kommen härtbare, niederviskose Epoxidharze in Frage, beispielsweise etwa das von der Firma CIBA-GEIGY AG, Basel, Schweiz, unter der Bezeichnung »Araldit CY 209« angebotene Harz mit dem Härter HT 972 oder andere Harz/Härter-Kombinationen, welche die gewünschten thermischen und mechanischen Festigkeiten ergeben.

Das Rohr 1, dessen Verstärkungsfasern selbst stark anisotrop sind und zudem unter einem kleinen Winkel zur Rohrachse orientiert sind, zeigt ein extrem anisotropes Verhalten, welches sich vor allem durch stark unterschiedliche Festigkeiten, E-Moduln sowie Wärmeausdehnungskoeffizienten in Längs- und Umfangsrichtung zeigt.

Wegen dieser extremen Anisotropie des Mehrschichtenverbundes, aus welchem das Rohr 1 besteht, ist es von größter Wichtigkeit, daß die Verstärkungshülsen 2 und 3, die ja zusammen mit den zwischen ihnen liegenden Rohrenden das zu übertragende Drehmoment aufnehmen und dabei erheblichen Belastungen ausgesetzt sein können, aus gleichem oder ähnlichem Material wie das Rohr sind und das gleiche oder wenigstens angenähert gleiche Anisotropie-Verhalten aufweisen wie das Rohr 1. Wäre dies nicht der Fall, so ergäben sich bei Temperaturänderungen zwischen den Verstärkungshülsen und den Rohrenden starke Spannungen, die im Extremfall bis zur Trennung führen können.

Weiter ist es wesentlich, daß die verstärkten Bereiche des Rohrs nicht abrupt enden, sondern daß sich die an den Rohrenden verdickte Rohrwand kontinuierlich auf die Wandstärke des Rohrs 1 reduziert. Die Verstärkungshülsen 2 und 3 sind dazu mechanisch so bearbeitet, daß sie gegen die Rohrmitte hin konisch auslaufen. Durch diesen sanften kontinuierlichen Übergang vom verstärkten Rohrende zum nicht verstärkten Wandbereich des Rohrs werden Spannungsspitzen vermieden.

In den F i g. 1, 2 und 4 sind die Wandverstärkungen der Rohrenden durch ein- bzw. aufgeklebte, vorgefertigte Verstärkungshülsen gebildet. Die Verstärkungen lassen sich jedoch auch auf andere Weise erzeugen, wenngleich dies wegen der hier verwendeten sehr kleinen Wickelwinkel wickeltechnisch nicht so einfach ist.

So können z. B. gemäß Fig. 5 bereits während der Herstellung des Rohrs auf den dabei verwendeten Wickeldorn D im Abstand der vorgesehenen Rohrlänge angeordnete, vorgefertigte und entsprechend geformte Verstärkungshülsen 12 durch Überwickeln mit den

Kohlenstoff-Fasern F in die Rohrstruktur eingebaut werden.

Anstelle der vorgefertigten Verstärkungshülsen 12 kann gemäß Fig. 6 auch eine lokale Wicklung 22 aus einem unidirektionalen Fasergewebe G auf den Wickeldorn aufgebracht werden. Die Fasern des Gewebes sind dabei so ausgerichtet, daß sie in der Wicklung dann gleich zu liegen kommen wie die Fasern des Rohres, so daß sich das gleiche Anisotropie-Verhalten ergibt.

Anstelle der direkten Integration der Wandverstärkungen in das Fasergefüge des Rohrs (Fig. 5 und 6) kann gemäß Fig. 7 der Wickel 22 aus unidirektionalem Gewebe G auch nachträglich auf das bereits fertig gewickelte Rohr 1 aufgebracht werden.

Für eine kontinuierliche Rohrproduktion, wie sie bei GFK-Rohren seit langem üblich ist, scheint das Überwickeln von vorgefertigten Rohrstücken gemäß Fig. 5 am zweckmäßigsten zu sein.

Bei den nach Fig. 5 – 7 hergestellten Rohren ergibt sich lediglich eine Aufdickung der Rohrenden nach außen. Dies ist jedoch unwesentlich, solange die dadurch erreichte Wandverstärkung ausreicht, die durch die Drehmomenteinleitung erzeugten Spannungen zu ertragen.

Bei einer praktisch ausgeführten Kunststoff-Kardanwelle betrug der Wickelwinkel ±12° und der Gehalt an Pitch-Fibers 70 Vol.-%. Diese Welle besaß eine kritische Drehzahl von über 8100 U/min und eine Torsionssteifigkeit, mit der der geforderte maximale Verdrehwinkel von 12° der Welle bei maximalem Drehmoment (1500 Nm) nicht überschritten wurde.

## Patentansprüche

1. Verfahren zur Herstellung eines mit Fasern hoher Steifigkeit, wie z. B. Kohlenstoffasern verstärkten Kunststoffrohrs, wobei mit einem härtbaren Kunststoff getränkte Verstärkungsfasern unter vorgegebenen Wickelwinkeln auf einen Kern aufgebracht werden und das Ganze dann ausgehärtet und nach der Aushärtung abgekühlt wird, dadurch gekennzeichnet, daß vor dem Aushärten auf die Verstärkungsfasern eine Umfangswicklung mit einem Wickelwinkel von etwa ±80° – 90° aufgebracht wird aus gegenüber den Verstärkungsfasern wesentlich nachgiebigerem Wickelmaterial mit einem erheblich kleineren E-Modul und einem thermischen Ausdehnungskoeffizienten in Längsrichtung, der höher ist als der thermische Ausdehnungskoeffizient des darunterliegenden Faser-Harz-Verbunds in Umfangsrichtung.

2. Verfahren nach Anspruch 1, dadurch gekennzeichnet, daß das nachgiebige Wickelmaterial unter einer solchen Spannung aufgebracht wird, daß ein Anteil an Verstärkungsfasern im Rohr von etwa 50 – 70, vorzugsweise etwa 55 – 65 Vol.-% erreicht wird.

3. Verfahren nach Anspruch 1 oder 2, dadurch gekennzeichnet, daß als nachgiebiges Wickelmaterial eine organische Faser oder ein entsprechendes Gewebe, insbesondere aus Polyester oder Polyamid, verwendet wird.

4. Verfahren nach Anspruch 2, dadurch gekennzeichnet, daß das nachgiebige Material mit einer Spannung aufgebracht wird, die in der Nähe derjenigen Belastung liegt, die es ohne Schaden zu nehmen aushält.

5. Verfahren nach einem der Ansprüche 1 – 4, dadurch gekennzeichnet, daß der Wärmedehnungskoeffizient des nachgiebigen Wickelmaterials größer als etwa $25 – 30 \cdot 10^{-6}$/oK ist.

6. Verfahren nach einem der Ansprüche 1 – 4, dadurch gekennzeichnet, daß der E-Modul des nachgiebigen Wickelmaterials in der Größenordnung um etwa 3000 N/mm² liegt.

7. Rohr, hergestellt gemäß dem Verfahren nach Anspruch 1, bei dem bei Verwendung von Kohlenstoffasern der Fasergehalt 50 bis 70, vorzugsweise 60 bis 70 Vol.-%, beträgt.

8. Rohr nach Anspruch 7, dadurch gekennzeichnet, daß im wesentlichen alle Verstärkungsfasern in einem Wickelwinkel von maximal ±30°, vorzugsweise ±10 – ±20°, zur Rohrachse orientiert sind.

## Claims

1. A process for the production of a plastics tube reinforced with fibres of high stiffness, e.g. carbon fibres, such that reinforcing fibres impregnated with a curable plastics material are wound at predetermined winding angles onto a core, and the whole is then cured, which process comprises winding onto said reinforcing fibres at an angle in the range from about ±80° to 90° a peripheral winding of a substantially more resilient material having a substantially lower E-modulus and a coefficient of thermal expansion which, in longitudinal direction, is higher than the coefficient of thermal expansion of the fibre-resin compound underneath in circumferential direction.

2. A process according to claim 1, wherein the resilient winding material is applied under such a tension that the reinforcing fibre content in the tube is in the range from about 50 – 70 vol.-%, with the preferred range being from about 55 – 65 vol.-%.

3. A process according to either of claims 1 or 2, wherein the resilient winding material is an organic fibre or a corresponding fabric, especially of polyester or polyamide.

4. A process according to claim 2, wherein the winding material is applied at a tension close to that stress which it withstands without being damaged.

5. A process according to any one of claims 1 to 4, wherein the coefficient of thermal expansion of the resilient winding material is greater than about $25 – 30 \cdot 10^{-6}$/oK.

6. A process according to any one of claims 1 to 4, wherein the E-modulus of the resilient winding material is approximately 3000 N/mm².

7. A tube obtained by the process of claim 1, wherein the fibre content, where carbon fibres are used, is 50 to 70 vol.-%, preferably 60 to 70 vol.-%.

8. A tube according to claim 7, wherein substantially all reinforcing fibres are oriented at a winding angle of max. ±30°, preferably ±10 to ±20°, to the tube axis.

**Revendications**

1. Procédé de fabrication d'un tube en résine armée de fibres de haute rigidité, comme par exemple des fibres de carbone, selon lequel des fibres d'armature imprégnées avec une résine synthétique durcissable sont posées sur un noyau, sous un angle d'enroulement prédéterminé, et l'ensemble est ensuite durci puis refroidi après le durcissement, procédé caractérisé en ce que, avant le durcissement, un enroulement périphérique est formé sur les fibres d'armature sous un angle d'enroulement d'environ ±80° −90°, en une matière d'enroulement essentiellement flexible par rapport aux fibres d'armature, avec un module E très petit et un coefficient de dilatation thermique dans la direction longitudinale supérieur au coefficient de dilatation thermique du composite fibres-résine dans la direction périphérique.

2. Procédé selon la revendication 1, caractérisé en ce que la matière d'enroulement flexible est posée sous une tension telle qu'une proportion de fibres d'armature dans le tube d'environ 50−70, de préférence d'environ 55−65% en volume est obtenue.

3. Procédé selon la revendication 1 ou 2, caractérisé en ce que la matière d'enroulement utilisée est une fibre organique ou un tissu correspondant, particulièrement en polyesther ou en polyamide.

4. Procédé selon la revendication 2, caractérisé en ce que la matière flexible est posée sous une tension qui se situe au voisinage de la charge qu'elle peut supporter sans subir de dommages.

5. Procédé selon l'une quelconque des revendications 1 à 4, caractérisé en ce que le coefficient de dilatation thermique de la matière d'enroulement flexible est supérieur à environ $25-30 \cdot 10^{-6}$/oK.

6. Procédé selon l'une quelconque des revendications 1 à 4, caractérisé en ce que le module E de la matière à enroulement flexible est de l'ordre de grandeur d'environ 3000 N/mm².

7. Tube fabriqué selon le procédé de la revendication 1, caractérisé en ce que dans l'utilisation de fibres de carbone, la teneur en fibres est de 50 à 70, de préférence de 60 à 70% en volume.

8. Tube selon la revendication 7, caractérisé en ce qu'essentiellement toutes les fibres d'armature sont orientées sous un angle d'enroulement maximal de ±30° de préférence de ±10 à 20° par rapport à l'axe du tube.

0 009 007

Fig.1

Fig.2

7

3

2

−1−

*Fig.4*

7

α

A

1

*Fig.3*

Fig.5

Fig.6

Fig.7